# EUROPÄISCHE PATENTSCHRIFT

(11) **EP 3 224 557 B1**
(45) Veröffentlichungstag und Bekanntmachung des Hinweises auf die Patenterteilung: **01.04.2020**
(21) Anmeldenummer: 15787465.2
(22) Anmeldetag: 23.10.2015
(51) Int. Cl.: F25D 23/06

(54) **KÜHL- UND/ODER GEFRIERGERÄT**
COOLING AND/OR FREEZING APPARATUS
APPAREIL DE RÉFRIGÉRATION ET/OU DE CONGÉLATION

(30) Priorität: 27.11.2014 DE 102014017597; 08.12.2014 DE 102014018071; 22.01.2015 DE 102015000821; 24.06.2015 DE 102015008124
(43) Veröffentlichungstag der Anmeldung: 04.10.2017
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: HIEMEYER, Jochen, 97753 Karlstadt (DE); FREITAG, Michael, 97082 Würzburg (DE); KERSTNER, Martin, 97072 Würzburg (DE)
(74) Vertreter: Herrmann, Uwe
(86) Internationale Anmeldenummer: PCT/EP2015/002108
(87) Internationale Veröffentlichungsnummer: WO 2016/082906

(56) Entgegenhaltungen:
- DE-A1-102010 040 346
- DE-A1-102013 005 585
- US-A- 5 798 154
- US-A1- 2004 058 119

## Beschreibung

Die vorliegende Erfindung betrifft ein Kühl- und/oder Gefriergerät mit einem gekühlten Innenraum, und einer den Innenraum wenigstens bereichsweise umgebenden Wandung, wobei sich zwischen dem Innenraum und der Wandung ein Vakuumdämmkörper (10) befindet.

Ein Vakuumdämmkörper zum Einsatz in einem Kühl- und/oder Gefriergerät ist beispielsweise aus der DE 10 2013 005 585 A1 bekannt. Der aus dieser Patentanmeldung bekannte Vakuumdämmkörper besteht aus einer diffusionsdichten, d.h. vakuumdichten Umhüllung, deren Oberfläche größer ist als die Oberfläche des Hüllkörpers, wie beispielsweise eines Innenbehälters, an dem die Umhüllung anliegt. So ist es beispielsweise möglich, vorspringende oder zurückversetzte Konturen des Hüllkörpers in der Umhüllung abbilden zu können.

In der DE 10 2013 005 585 A1 wird die Möglichkeit beschrieben, den Vakuumdämmkörper aus einer Innen- sowie aus einer Außenhülle herzustellen. Eine solche separate Herstellung der zwei Hüllbestandteile ist zum einen aufwendig, zum anderen ist die vakuumdichte Versiegelung durch die Notwendigkeit einer Schweißung an einem dreidimensionalen Folienkonturbeutel kompliziert und ggf. fehleranfällig.

Gattungsgemäße Kühl- und/oder Gefriergeräte bzw. zum Einsatz in Kühl- und/oder Gefriergeräten geeignete Vakuumdämmkörper werden weiterhin in den Dokumenten DE 10 2010 040 346 A1, US 2004/058119 A1 und US 5,798,154 A offenbart.

Der vorliegenden Erfindung liegt somit die Aufgabe zugrunde, ein Kühl- und/oder Gefriergerät der eingangs genannten Art dahingehend weiterzubilden, dass die Herstellung des davon umfassten Vakuumdämmkörpers vergleichsweise einfach und zuverlässig ist.

Diese Aufgabe wird durch ein Kühl- und/oder Gefriergerät mit den Merkmalen des Anspruchs 1 gelöst.

Danach ist vorgesehen, dass die Umhüllung des Vakuumdämmkörpers einen Außenbereich und einen von dem Außenbereich zumindest teilweise umgebenen Innenbereich aufweist, wobei der Innenbereich und der Außenbereich durch einen gemeinsamen Folienbeutel gebildet werden und wobei der Innenbereich durch Umstülpen des Folienbeutels ausgebildet ist. Die Innenseite des Vakuumdämmkörpers, die zu dem Innenbehälter des Kühl- und/oder Gefriergerätes benachbart ist und die Außenseite des Vakuumdämmkörpers, die zu dem Außengehäuse des Kühl- und/oder Gefriergerätes benachbart ist, werden erfindungsgemäß durch ein gemeinsames Teil in Form eines gemeinsamen Foliensackes bzw. einer gemeinsamen Schlauchfolie gebildet.

Der vorliegenden Erfindung liegt der Gedanke zugrunde, die Innenhülle, d.h. den Innenbereich, sowie die Außenhülle, d.h. den Außenbereich, des Vakuumdämmkörpers nicht aus zwei getrennten Folienstücken auszubilden, sondern durch einen gemeinsamen Folienbeutel.

Der Innenbereich wird dadurch ausgebildet, dass der Folienbeutel nach innen umgestülpt wird. Damit entfällt die Notwendigkeit, an komplexen Schweißstellen die Versiegelung vornehmen zu müssen, da der Innenbereich und der Außenbereich durch ein und denselben Folienbeutel gebildet werden.

Es besteht nur noch die Notwendigkeit, den Folienbeutel nach dem Befüllen mit Kernmaterial vakuumdicht zu verschließen. Dazu kann eine weitere vakuumdichte Umhüllung verwendet werden, die z.B. auf den Randbereich des Außenbereiches aufgesetzt und mit diesem vakuumdicht verbunden bzw. versiegelt wird.

Der Folienbeutel besteht vorzugsweise aus einem einseitig offenen Beutel, dessen offene Seite durch den Rand des Außenbereiches umgeben wird und dessen geschlossene Seite nach dem Umstülpen die Bodenfläche des Innenbereiches bildet.

Vorzugsweise ist vorgesehen, dass der Innenbereich einen Boden aufweist und dass der Rand des Folienbeutels auf derselben Seite des Vakuumdämmkörpers angeordnet ist, wie der Boden des Innenbereiches.

Vorzugsweise ist vorgesehen, dass der Außenbereich einen umlaufenden Rand bzw. eine umlaufende Kante aufweist, die durch den Endbereich bzw. Rand des Folienbeutels gebildet wird.

In einer bevorzugten Ausgestaltung der Erfindung ist vorgesehen, dass die vakuumdichte Umhüllung teilweise oder vollständig aus einer Hochbarrierefolie besteht oder eine Hochbarrierefolie aufweist.

Vorzugsweise ist vorgesehen, dass die vakuumdichte Umhüllung teilweise oder vollständig aus einer Aluminiumverbundfolie besteht oder eine Aluminiumverbundfolie aufweist.

In einer besonders bevorzugten Ausgestaltung der Erfindung ist vorgesehen, dass der Übergangsbereich zwischen dem Innenbereich und dem Außenbereich des Folienbeutels teilweise oder vollständig aus einem anderen Folientyp bzw. Material besteht als die den Außenbereich selbst und/oder den Innenbereich selbst bildende Folie. Dadurch ist es möglich, diesem Übergangsbereich andere Wärmedämmeigenschaften zu verleihen, als den weiteren Bereichen des Folienbeutels.

Vorzugsweise besteht auch der Übergangsbereich wie auf der Innenbereich und der Außenbereich aus einer Hochbarrierefolie.

Der genannte Übergangsbereich stellt vorzugsweise einen integralen Bestandteil des Folienbeutels dar.

So ist es beispielsweise denkbar, dass es sich bei dem anderen Folientyp, der den Übergangsbereich ausbildet, um eine metallisierte Folie handelt. Denkbar ist es beispielsweise, dass es sich um eine Folie handelt, auf die eine Metallschicht, vorzugsweise eine Aluminiumschicht aufgedampft ist.

In einer weiteren Ausgestaltung der Erfindung ist vorgesehen, dass es sich bei dem Folienbeutel um einen Klotzbodenbeutel handelt.

Weiterhin ist vorgesehen, dass es sich bei dem Folienbeutel um einen Folienkonturbeutel handelt, der eine oder mehrere Ausnehmungen aufweist.

Diese Ausnehmungen können beispielsweise dadurch erhalten werden, dass der Beutel eingefaltet wird, so dass eine Ausnehmung entsteht und dass die überstehenden Flächen versiegelt und sodann abgetrennt werden.

Im Bezug auf das erfindungsgemäße Kühl- und/oder Gefriergerät stellt der Vakuumdämmkörper vorzugsweise ein Vollvakuumsystem dar, welches im Raum zwischen der den Innenraum des Gerätes begrenzenden Innenwand und der Außenhaut des Gerätes angeordnet ist. Unter einem Vollvakuumsystem ist eine Wärmedämmung zu verstehen, die ausschließlich oder überwiegend aus einem evakuierten Bereich besteht, der mit einem Kernmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Geräts und der Außenhaut des Gerätes, als Wärmedämmung ausschließlich ein solcher Folienkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Gerätes sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus und/oder zwischen der Innenseite und der Außenseite des Verschlusselementes, wie z.B. einer Tür, Klappe, Deckel oder dergleichen erstrecken.

Das Vollvakuumsystem kann so erhalten werden, dass eine Umhüllung aus einer gasdichten Folie mit einem Kernmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle, beispielsweise eines Evakuierungsstutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

In einer Ausführungsform ist vorgesehen, dass es sich bei dem erfindungsgemäßen Kühl- und/oder Gefriergerät um ein Haushaltsgerät oder ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner sind auch Kühl- und/oder Gefriertruhen von der Erfindung umfasst. Die erfindungsgemäßen Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

Vorzugsweise ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist denkbar, dass das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Betrieb mit Gleichspannung kann insbesondere dann zur Anwendung kommen, wenn das Behältnis eine thermoelektrische Wärmepumpe zum Temperieren des Innenraums aufweist.

Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf. Die Außenabmessungen des Behälters bzw. Gerätes liegen vorzugsweise im Bereich bis 1 m hinsichtlich der Höhe, der Breite und der Tiefe.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10⁻⁵ mbar ^{∗} l / s ^{∗}m² und besonders bevorzugt < 10⁻⁶ mbar ^{∗} l / s ^{∗}m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10⁻² mbar ^{∗} l / s ^{∗} m² und besonders bevorzugt im Bereich von < 10⁻³ mbar ^{∗} l / s ^{∗} m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Weitere Einzelheiten und Vorteile der Erfindung werden anhand eines in der Zeichnung dargestellten Ausführungsbeispiels näher erläutert. Es zeigen:
- Figur 1:: eine Schnittansicht durch einen Vakuumdämmkörper eines Kühl- und/oder Gefriergeräts gemäß der Erfindung;
- Figur 2:: eine Teilansicht des Innenbereiches eines Vakuumdämmkörpers eines Kühl- und/oder Gefriergeräts gemäß der Erfindung; und
- Figur 3:: ein Folienmuster zur Herstellung eines Folienbeutels für einen Vakuumdämmkörper eines Kühl- und/oder Gefriergeräts gemäß der Erfindung.

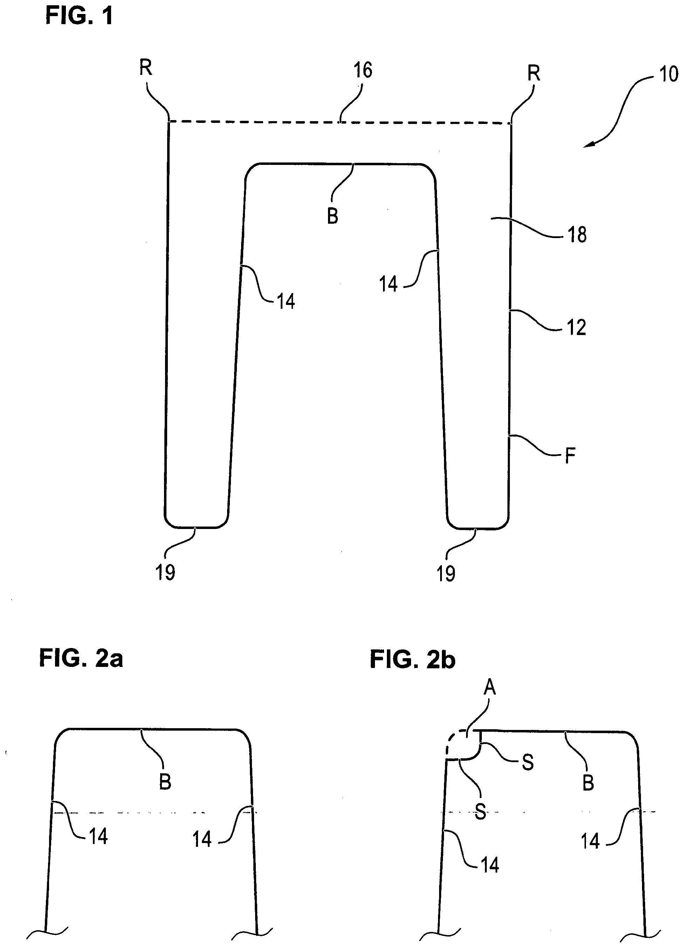

Figur 1 zeigt mit dem Bezugszeichen 10 einen Vakuumdämmkörper eines Kühl- und/oder Gefriergeräts gemäß der vorliegenden Erfindung.

Der Vakuumdämmkörper 10 umfasst eine vakuumdichte Umhüllung, die zum einen aus dem Folienbeutel F und zum anderen aus einer Folie 16 gebildet wird, die miteinander vakuumdicht verbunden bzw. versiegelt werden.

Innerhalb der vakuumdichten Umhüllung herrscht Vakuum. In diesem evakuierten Bereich befindet sich ein Kernmaterial, wie beispielsweise Perlit als Stützkörper.

Gemäß der Erfindung umfasst der Vakummdämmkörper den Folienbeutel F bzw. Schlauchbeutel, der einen Außenbereich 12 und einen Innenbereich 14 aufweist. Diese Bereiche bestehen aus vakuumdichter, vorzugweise siegelfähiger Folie, vorzugsweise aus Aluminiumverbundfolie. Der dazwischen befindliche Bereich 18 ist evakuiert und mit dem Kernmaterial gefüllt. Dies gilt entsprechend für den Bereich zwischen dem Boden B des Innenbereiches 14 und der Abdeckfolie 16.

Wie dies aus Figur 1 hervorgeht, wird die Umhüllung dadurch gebildet, dass ein Folienbeutel F, dessen offener Bereich gemäß Figur 1 oben ist und der ansonsten geschlossen ist nach innen bzw. gemäß Figur 1 nach oben umgestülpt wird, sodass sich ein innenliegender Bereich 14 ergibt, der von dem außenliegenden Bereich 12 umgeben ist.

Zwischen den Bereichen 12 und 14 existiert ein Übergangsbereich 19.

Die Bereiche 12, 14 und 19 sind alle integrale Bestandteile eines gemeinsamen Folienbeutels F.

Wie dies aus Figur 1 hervorgeht, befindet sich der Boden B des Innenbereichs 14 auf derselben Seite es Vakuumdämmkörpers 10 wie der Rand R des Folienbeutels. Der Rand R bzw. der Boden sind gemäß Figur 1 oben angeordnet.

Im gebrauchsfertigen Zustand befinden sich der Rand R und der Boden B unten.

Der Innenbereich 14 dient zur Aufnahme eines Innenbehälters und der Außenbereich 12 ist benachbart zu einem Außengehäuse eines Kühl- bzw. Gefriergerätes angeordnet. Der Innenbehälter besteht beispielsweise aus Kunststoff, der Außenmantel besteht ebenfalls aus Kunststoff oder beispielsweise auch aus Metall.

Erfindungsgemäß wird der Innenbereich 14 und der Außenbereich 12 des Vakuumdämmkörpers 10 bzw. der vakuumdichten Umhüllung durch einen einzigen Folienbeutel und nicht durch mehrere Elemente bzw. Folienstücke gebildet, die miteinander verschweißt werden müssen.

Dies bringt den Vorteil mit sich, dass gemäß Figur 1 vorzugsweise nur eine einzige Schweißnaht anzubringen ist und zwar eine Schweißnaht, die vorzugsweise in einer ebenen Fläche angeordnet werden kann. Diese Schweißnaht dient zur Fixierung der Abdeckfolie 16 auf dem umlaufenden Randbereich R des Folienbeutels bzw. des Außenbereiches 12 bzw. zur Herstellung einer vakuumdichten Verbindung zwischen Folie 16 und dem Außenbereich 12 bzw. von dessen Rand R.

Vorzugsweise besteht der Folienbeutel in den Bereichen 12 und 14 aus einer Hochbarrierefolie. Entsprechendes gilt für den umlaufenden Übergangsbereich 19, die die Bereiche 12 und 14 miteinander verbindet.

Des Weiteren bestehen die Bereiche 12 und 14 vorzugsweise aus einer Aluminiumverbundfolie, wohingegen der Übergangsbereich 19 aus einer metallisierten Folie besteht, die einen höheren Widerstand gegen den Wärmedurchtritt aufweist, als die Aluminiumverbundfolie 12, 14. Auf diese Weise ist es möglich, den Übergangsbereich 19, der in einem fertigen Kühl- bzw. Gefriergerät, insbesondere in einer Truhe z.B. oben liegt, mit einem minimierten Wärmeübergang zu realisieren.

Im Rahmen der vorliegenden Erfindung ist es erforderlich, den Innenbereich 14 und/oder den Außenbereich 12 zu konturieren bzw. einen Folienkonturbeutel bereitzustellen, der eine bestimmte Konturierung aufweist, die dem fertigen Gerät angepasst ist.

So ist es notwendig, in dem Folienbeutel, der in Figur 2a) nur teilweise mit seinem Innenbereich 14 dargestellt ist, eine Ausnehmung auszubilden, die der Kompressornische nachgebildet ist. Dies wird dadurch erreicht, dass ausgehend von dem Zustand gemäß Figur 2a) ein Seitenbereich, beispielsweise die linke obere Ecke eingefaltet wird und die Seitenhalbflächen gemäß Figur 2b), die mit dem Bezugszeichen A gekennzeichnet sind, gegenüber dem benachbarten Folienbereich durch Siegelnähte S versiegelt werden und sodann nur der Bereich A abgetrennt wird.

So ist es möglich, eine Ausnehmung, d.h. eine konkave Einwölbung oder dergleichen z.B. im Innenbereich des Folienbeutels herzustellen. Dies gewährleistet es, dass der Innenbereich 14 möglichst konturgetreu an einem Innenbehälter anliegt, der in den Innenbereich 14 eingesetzt ist.

Entsprechende Maßnahmen können selbstverständlich auch für andere Bereiche des Innenbereichs und/oder des Außenbereiches vorgenommen werden.

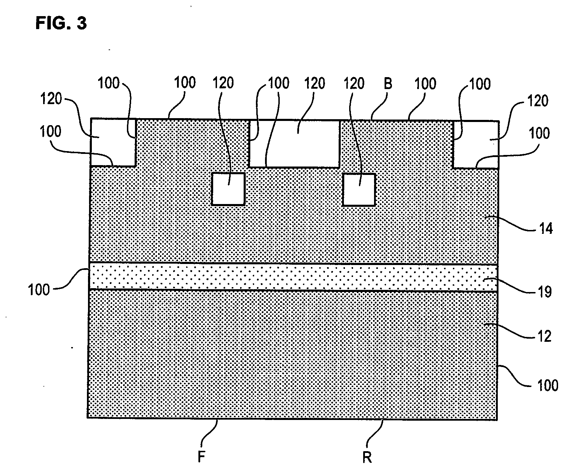

Figur 3 zeigt ein Folienmuster, das beispielsweise aus Rollenware besteht. Dieses Folienmuster weist den späteren Innenbereich 14, den späteren Außenbereich 12 und den Übergangsbereich 19 auf.

Das Folienmuster besteht aus einer ebenen Hochbarrierefolie, die entlang der mit dem Bezugszeichen 100 gekennzeichneten Flächen miteinander versiegelt wird, so dass ein Folienbeutel entsteht.

Bei der Hochbarrierefolie kann es sich um eine ein- oder beidseitig siegelfähige Folie handeln.

Aus dem Folienmuster gemäß Figur 3 kann durch Auflegen der gemäß Figur 3 rechten Folienseite auf die gemäß Figur 3 linke Folienseite und anschließendes umlaufendes Versiegeln bis auf die untere Seite ein Folienbeutel hergestellt werden. An diesem können z.B. Tütenklemmen zum leichteren Handling befestigt sein. Diese können im Weiteren als Referenzpunkt zum Folienbeutelhandling dienen.

Mit dem Bezugszeichen 120 sind Flächen gekennzeichnet, die nach der Herstellung des Folienbeutels bzw. nach der Versiegelung entlang der Naht S weggeschnitten werden, wie dies zu Figur 2 b) näher erläutert wurde.

Wie dort ausgeführt, kann beispielsweise eine Kompressornische eingeformt werden, die Ecken können versiegelt werden und die Bereiche 120 können abgetrennt werden.

Auf diese Weise kann ein Folienkonturbeutel hergestellt werden, in dem bereits vorspringende und/oder zurückversetzte Konturen eingearbeitet sind, damit dieser bzw. der daraus hergestellte Vakuumkörper möglichst konturgetreu an dem Innenbehälter bzw. an einem Außenmantel des Kühl- und/oder Gefriergerätes anliegt.

Der Bereich 14 bildet nach dem Umstülpen des Beutelbodens nach innen den Innenbereich, der an dem Innenbehälter des Gerätes anliegt und der Bereich 12 bildet den Außenbereich, der an dem Mantel bzw. Gehäuse des Geräts anliegt. Der Streifen 19 bildet den Übergangsbereich zwischen den Bereichen 12 und 14.

Dieser bildet im Gerät den oberen Randbereich des Vakuumkörpers. Dieser kann beispielsweise unterhalb des Rahmens einer Kühl- und/oder Gefriertruhe angeordnet sein. Somit erfolgt das Umstülpen derart, dass nur der Bereich ab dem Bereich 19 nach innen umgestülpt wird.

## Patentansprüche

1. Kühl- und/oder Gefriergerät mit einem gekühlten Innenraum, und einer den Innenraum wenigstens bereichsweise umgebenden Wandung, wobei sich zwischen dem Innenraum und der Wandung ein Vakuumdämmkörper (10) befindet, der Vakuumdämmkörper (10), umfassend:
eine vakuumdichte Umhüllung, die einen evakuierten Bereich (18) umgibt, in dem ein Kernmaterial angeordnet ist, wobei die Umhüllung einen Außenbereich (12) und einen von dem Außenbereich (12) zumindest teilweise umgebenen Innenbereich (14) aufweist, wobei der Innenbereich (14) und der Außenbereich (12) durch einen gemeinsamen Folienbeutel (F) gebildet sind, und der Innenbereich (14) durch Umstülpen des Folienbeutels (F) ausgebildet ist, wobei es sich bei dem Folienbeutel (F) um einen Folienkonturbeutel handelt, der eine oder mehrere Ausnehmungen aufweist.

2. Kühl- und/oder Gefriergerät nach Anspruch 1, **dadurch gekennzeichnet, dass** der Innenbereich (14) einen Boden (B) aufweist und dass der Rand (R) des Folienbeutels (F) auf derselben Seite des Vakuumdämmkörpers (10) angeordnet ist, wie der Boden (B) des Innenbereichs (14).

3. Kühl- und/oder Gefriergerät nach Anspruch 1 oder 2, **dadurch gekennzeichnet, dass** der Außenbereich (12) einen umlaufenden Rand (R) aufweist, der durch den Rand (R) des Folienbeutels (F) gebildet wird.

4. Kühl- und/oder Gefriergerät nach einem der vorhergehenden Ansprüche, **dadurch gekennzeichnet, dass** die vakuumdichte Umhüllung aus einer Hochbarrierefolie besteht oder eine Hochbarrierefolie aufweist.

5. Kühl- und/oder Gefriergerät nach einem der vorhergehenden Ansprüche, **dadurch gekennzeichnet, dass** die vakuumdichte Umhüllung aus einer Aluminiumverbundfolie besteht oder eine Aluminiumverbundfolie aufweist.

6. Kühl- und/oder Gefriergerät nach einem der vorhergehenden Ansprüche, **dadurch gekennzeichnet, dass** der Übergangsbereich (19) zwischen dem Innenbereich (14) und dem Außenbereich (12) teilweise oder vollständig aus einem anderen Folientyp besteht als die den Außenbereich (12) und/oder den Innenbereich (14) bildende Folie.

7. Kühl- und/oder Gefriergerät nach Anspruch 6, **dadurch gekennzeichnet, dass** es sich bei dem anderen Folientyp um eine metallisierte Folie handelt.

8. Kühl- und/oder Gefriergerät nach einem der vorhergehenden Ansprüche, **dadurch gekennzeichnet, dass** es sich bei dem Folienbeutel (F) um einen Klotzbodenbeutel handelt.

9. Kühl- und/oder Gefriergerät nach einem der vorhergehenden Ansprüche, **dadurch gekennzeichnet, dass** die Ausnehmung (120) des Folienkonturbeutels durch Versiegeln und Abtrennen der Seitenflächen (A) der Ausnehmung (120) gebildet ist.

## Claims

1. Refrigeration and/or freezer device with a cooled inner space, and a wall at least partially surrounding the inner space, wherein a vacuum insulation body (10) is located between the inner space and the wall, the vacuum insulating body (10) comprising:
a vacuum-tight covering, which surrounds an evacuated region (18) in which a core material is arranged, wherein the covering comprises an outer region (12) and inner region (14) at least partially surrounded by the outer region (12), wherein the inner region (14) and the outer region (12) are formed by a common film bag (F), und the inner region (14) is formed by inverting the film bag (F), wherein the film bag (F) is a film contour bag that has one or more recesses.

2. Refrigeration and/or freezer device in accordance with claim 1, **characterized in that** the inner region (14) has a base (B) and that the margin (R) of the film bag (F) is arranged at the same side of the vacuum insulation body (10) as the base (B) of the inner region (14).

3. Refrigeration and/or freezer device in accordance with claim 1 or 2, **characterized in that** the outer region (12) has a peripheral margin that is formed by the margin (R) of the film bag (F).

4. Refrigeration and/or freezer device in accordance with one of the preceding claims, **characterized in that** the vacuum-tight covering consists of or comprises a high barrier film.

5. Refrigeration and/or freezer device in accordance with one of the preceding claims, **characterized in that** the vacuum-tight covering consists of or comprises a laminated aluminum film.

6. Refrigeration and/or freezer device in accordance with one of the preceding claims, **characterized in that** the transition region (19) between the inner region (14) and the outer region (12) partially or completely consists of a different type of film than the film forming the outer region (12) and/or the inner region (14).

7. Refrigeration and/or freezer device in accordance with claim 6, **characterized in that** the different film type is a metalized film.

8. Refrigeration and/or freezer device in accordance with one of the preceding claims, **characterized in that** the film bag (F) is a square bottom bag.

9. Refrigeration and/or freezer device in accordance with one of the preceding claims, **characterized in that** the recess (120) of the film contour bag is formed by sealing and cutting off of the side surfaces (A) of the recess (120).

## Revendications

1. Appareil de réfrigération et/ou de congélation avec un espace intérieur réfrigéré, et une paroi entourant au moins par endroits l'espace intérieur, dans lequel se trouve entre l'espace intérieur et la paroi un corps d'isolation à vide (10), le corps d'isolation à vide (10) comprenant :
une enveloppe étanche au vide, qui entoure une zone (18) mise sous vide, dans laquelle est disposé un matériau central, dans lequel l'enveloppe présente une zone extérieure (12) et une zone intérieure (14) entourée au moins en partie par la zone extérieure (12), dans lequel la zone intérieure (14) et la zone extérieure (12) sont formées par un sac en film (F) commun, et la zone intérieure (14) est réalisée en rabattant le sac en film (F), dans lequel le sac en film (F) est un sac contouré en film, qui présente un ou plusieurs évidements.

2. Appareil de réfrigération et/ou de congélation selon la revendication 1, **caractérisé en ce que** la zone intérieure (14) présente un fond (B), et que le bord (R) du sac en film (F) est disposé sur le même côté du corps d'isolation à vide (10) que celui du fond (B) de la zone intérieure (14).

3. Appareil de réfrigération et/ou de congélation selon la revendication 1 ou 2, **caractérisé en ce que** la zone extérieure (12) présente un bord périphérique (R), qui est formé par le bord (R) du sac en film (F).

4. Appareil de réfrigération et/ou de congélation selon l'une quelconque des revendications précédentes, **caractérisé en ce que** l'enveloppe étanche au vide est constituée d'un film haute barrière ou présente un film haute barrière.

5. Appareil de réfrigération et/ou de congélation selon l'une quelconque des revendications précédentes, **caractérisé en ce que** l'enveloppe étanche au vide est constituée d'un film composite en aluminium ou présente un film composite en aluminium.

6. Appareil de réfrigération et/ou de congélation selon l'une quelconque des revendications précédentes, **caractérisé en ce que** la zone de transition (19) entre la zone intérieure (14) et la zone extérieure (12) est constituée en partie ou en totalité d'un autre type de film que le film formant la zone extérieure (12) et/ou la zone intérieure (14).

7. Appareil de réfrigération et/ou de congélation selon la revendication 6, **caractérisé en ce que** l'autre type de film est un film métallisé.

8. Appareil de réfrigération et/ou de congélation selon l'une quelconque des revendications précédentes, **caractérisé en ce que** le sac en film (F) est un sac à fond plat.

9. Appareil de réfrigération et/ou de congélation selon l'une quelconque des revendications précédentes, **caractérisé en ce que** l'évidement (120) du sac contouré en film est formé en scellant et séparant les surfaces latérales (A) de l'évidement (120).
